# EUROPÄISCHE PATENTSCHRIFT

(11) **EP 2 328 979 B1**
(45) Veröffentlichungstag und Bekanntmachung des Hinweises auf die Patenterteilung: **31.10.2012**
(21) Anmeldenummer: 09778248.6
(22) Anmeldetag: 01.09.2009
(51) Int. Cl.: C09C 1/36, C09C 1/48, C09D 17/00, B01F 17/34

(54) **MONOCARBONSÄUREESTER ENTHALTENDES DISPERGIERMEDIUM FÜR FESTSTOFFPRÄPARATIONEN**
DISPERSION MEDIUM COMPRISING MONOCARBOXYLIC ACID ESTERS FOR SOLID PREPARATIONS
AGENT DE DISPERSION CONTENANT DE L'ESTER D'ACIDE MONOCARBOXYLIQUE POUR PRÉPARATIONS SOLIDES

(30) Priorität: 02.09.2008 DE 102008045296
(43) Veröffentlichungstag der Anmeldung: 08.06.2011
(73) Patentinhaber: BYK-Chemie GmbH, 46483 Wesel (DE)
(72) Erfinder: FISCHER, Martin, 46485 Wesel (DE); PRITSCHINS, Wolfgang, 46487 Wesel (DE); VENNHOFF, Frank, 46519 Alpen (DE); SPIKKER-HEILEN, Lucia, 46519 Alpen (DE); ESSER, Andrea, 46485 Wesel (DE)
(74) Vertreter: Leifert & Steffan
(86) Internationale Anmeldenummer: PCT/EP2009/006322
(87) Internationale Veröffentlichungsnummer: WO 2010/025889

(56) Entgegenhaltungen:
- EP-A2- 1 837 355
- WO-A1-00/49099
- DE-A1- 2 728 237
- DE-A1- 10 314 520
- NSIB F ET AL: "Selection of dispersants for the dispersion of carbon black in organic medium" PROGRESS IN ORGANIC COATINGS, ELSEVIER BV, NL, Bd. 55, Nr. 4, 1. April 2006 (2006-04-01), Seiten 303-310, XP025044324 ISSN: 0300-9440 [gefunden am 2006-04-01]

## Beschreibung

Die vorliegende Erfindung betrifft als Dispergiermedium geeignete Zusammensetzungen für Feststoffpräparationen, Mahlgüter enthaltend die Dispergiermedien und die weitere Verwendung der Mahlgüter.

Dispergiermedien dienen zur Herstellung von fließfähigen und gut handhabbaren Feststoffpräparationen von Feststoffteilchen.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Bei solchen Dispergiermitteln handelt es sich um oberflächenaktive Stoffe, anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, daß es auch nach vollständiger Deflockulierung der Feststoffagglomerate in Primärteilchen, nach dem Dispergierprozeß zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie: Viskositätsanstieg in flüssigen Systemen, Farbtondrift und Glanzverlusten in Lacken und Beschichtungen sowie der Verringerung der mechanischen Festigkeit in Kunststoffen.

Feststoffpräparationen (Konzentrate) für den Einsatz in lösemittelfreien Medien wie zum Beispiel thermoplastischen Kunststoffen werden nach dem Stand der Technik in der Regel in Weichmachern oder niedermolekularen Polymeren als Träger hergestellt. Als Weichmacher finden meistens Phthalate wie Dibutylphthalat, Dioctylphthalat, Diisodecylphthalat oder Adipate wie Dioctyladipat, Diisononyladipat oder Diisodecyladipat Verwendung.

EP 1 837355 A2 offenbart Additionsverbindungen mit uretdiongruppenhaltigen Polyisocyanaten für die Herstellung von Lacken und Formmassen.

DE 103 14 520 A1 offenbart granulatförmige Füllstoffpräparationen, die Dispergier- und Bindemittel enthalten.

Die bisher bekannten Dispergiermedien stellen oft nur Teillösungen für diese Probleme dar. Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt. Außerdem sind die Viskositäten der damit herstellbaren Feststoffpräparationen sehr hoch, so daß nur niedrige Feststoffgehalte möglich sind und die Handhabung schwierig ist.

Der vorliegenden Erfindung liegt daher die Aufgabe zugrunde, die zuvor beschriebenen Nachteile bekannter Dispergiermedien zu beseitigen, d.h. Dispergiermedien zu entwickeln, die bei guter Stabilisierung von Pigmenten oder Füllstoffen die Mahlgutviskosität der Feststoffpräparationen so weit senken, dass eine Verarbeitung bei hohem Füllgrad möglich ist. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, daß die verwendeten erfindungsgemäßen Dispergieradditive eine flockulationsfreie Mischbarkeit der Pasten, bzw. der mit diesen Pasten hergestellten Bindemittel oder Kunststoffmassen, untereinander ermöglichen. Die damit hergestellten Feststoffpräparationen sollen möglichst weitgehend frei von flüchtigen organischen Verbindungen (VOC = Volatile Organic Compounds) sein und keine unter Umweltaspekten kritisch betrachteten Weichmacher, insbesondere Phthalate enthalten, sondern möglichst auf Basis nachwachsender Rohstoffe produzierbar sein. Unter VOC werden hier organische Verbindung mit einem Anfangssiedepunkt von höchstens 250°C bei einem Standarddruck von 101,3 kPa verstanden. Die Dispergiermedien sollen leicht handhabbar, also flüssig und niedrigviskos sein und dem Anwender eine einfache Verarbeitung durch eine möglichst geringe Anzahl an aufwendigen Dosierschritten ermöglichen.

Überraschenderweise hat es sich gezeigt, daß eine deutliche Verbesserung in der Dispergierung und Stabilisierung von Pigmenten oder Füllstoffteilchen in Bindemitteln, Pigmentpasten oder Kunststoffformulierungen erreicht werden kann, wenn die nachfolgend beschriebenen erfindungsgemäßen Zusammensetzungen eingesetzt werden.

Weiterhin sind diese Dispergiermedien überraschend breit verträglich und können in vielen lösemittelfeien Systemen eingesetzt werden. Sie zeichnen sich durch eine niedrige Viskosität des Mahlgutes während der Dispergierung aus und erlauben es daher Formulierungen mit hohem Feststoffanteil herzustellen. Des weiteren sind die Farbstärken der erfindungsgemäß hergestellten Pigmentkonzentrate im Vergleich zu den nach dem Stand der Technik hergestellten aufgrund einer feineren Dispergierung in der Regel deutlich höher, so dass entweder mit gleicher Farbpigmentmenge eine intensivere Färbung oder bei gleichbleibender Färbung eine Material- und damit Kostenersparnis zu erzielen ist.

Es wurde überraschenderweise gefunden, dass die obigen Aufgaben gelöst wurden durch die Bereitstellung von Zusammensetzungen enthaltend als Komponente (A) 10 bis 97 Gew.-% bezogen auf das Gesamtgewicht der Zusammensetzung eines oder mehrerer Monocarbonsäureester der allgemeinen Formel R¹-CO-OR², worin R¹ für eine gesättigte oder ungesättigte, verzweigte oder geradkettige, aliphatische Gruppe mit 11 bis 23 Kohlenstoffatomen steht und R² für eine verzweigte oder geradkettige aliphatische, eine cycloaliphatische oder aromatische Gruppe mit 1 bis 13 Kohlenstoffatomen steht und die Summe der Kohlenstoffatome der Gruppen R¹ und R² maximal 30 beträgt, wobei der oder die Monocarbonsäureester einen Siedepunkt bei einem Standarddruck von 101,3 kPa größer 250°C besitzen und als Komponente (B) 3 bis 90 Gew.% bezogen auf das Gesamtgewicht der Zusammensetzung eines oder mehrerer Dispergiermittel, wobei die Zusammensetzung eine Viskosität bei 25°C von kleiner 5000 mPas besitzt. Die Viskosität wird mit einem Brookfield Rotationsviskosimeter (Rotationsviskosimeter RVT) bei 20 Umdrehungen pro Minute bestimmt. Dabei wird die Spindel in Abhängigkeit der Viskosität so gewählt, dass der abzulesende Wert im Bereich von 10 bis 90 % der Meßskala und möglichst nahe beim 50 %-Wert der Meßskala liegt.

In einer bevorzugten Ausführungsform beträgt der gewichtsprozentuale Anteil der Komponente (A) mindestens 15 Gew.%, vorzugsweise mindestens 25 Gew.%, besonders bevorzugt mindestens 50 Gew.% und ganz besonders bevorzugt mindestens 75 Gew.% bezogen auf das Gesamtgewicht der Zusammensetzung. Der maximale Anteil liegt bevorzugt bei 96 Gew.-% bezogen auf das Gesamtgewicht der Zusammensetzung.

Der gewichtsprozentuale Anteil der Komponente (B) beträgt in einer bevorzugten Ausführungsform mindestens 4 Gew.%, und besonders bevorzugt mindestens 6 Gew.-% bezogen auf das Gesamtgewicht der Zusammensetzung. Der maximale Anteil liegt bevorzugt bei 75 Gew.%, besonders bevorzugt bei 50 Gew.% und ganz besonders bevorzugt bei 25 Gew:% bezogen auf das Gesamtgewicht der Zusammensetzung.

Vorzugsweise beträgt die Summe der gewichtsprozentualen Anteile der Komponenten (A) und (B) am Gesamtgewicht der Zusammensetzung mindestens 50 Gew.-%, besonders bevorzugt mindestens 70 Gew.%, ganz besonders bevorzugt mindestens 90 Gew.% und am besten mindestens 95 Gew.-%.

Sofern die erfindungsgemäße Zusammensetzung nicht aus Komponenten (A) und (B) alleine besteht, kann diese zusätzlich ein oder mehrere lack- oder kunststofftypische Additive (C) enthalten, die von (A) und (B) verschieden sind und vorzugsweise gewählt sind aus der Gruppe bestehend aus Verlaufes- und Filmbildehilfsmitteln, Rheologiehiffsmitteln, Entschäumem, Haftvermittlern, Lichtschutzmitteln, Bioziden, flüssigen oder löslichen Stabilisatoren und Katalysatoren. Sollten lack- und/oder kunststofffypische Additive enthalten sein, so besteht die erfindungsgemäße Zusammensetzung aus den Komponenten (A). (B) und (C). Die erfindungsgemäße Zusammensetzung ist üblicherweise und vorzugsweise frei von Bindemitteln und VOC. Als frei von flüchtigen organischen Verbindungen wird hierin verstanden, dass die Zusammensetzung weniger als 1 Gew.% an flüchtigen organischen Verbindungen enthält, vorzugsweise weniger als 0,1 Gew.% und ganz besonders bevorzugt weniger als 0,01 Gew.-%.

In einer bevorzugten Ausführungsform besteht die Zusammensetzung ausschließlich aus Komponente (A) und Komponente (B).

Die Zusammensetzung besitzt eine wie oben angegeben zu bestimmende Viskosität bei 25°C von kleiner 5000 mPas, vorzugsweise kleiner 2000 mPas, besonders bevorzugt kleiner 1000 mPas und ganz besonders bevorzugt kleiner 500 mPas. Liegt die Viskosität bei 5000 mPas oder darüber, ist keine ausreichende Fließfähigkeit und Pumpbarkeit mehr gegeben, insbesondere bei tieferen Temperaturen, und es lassen sich nur noch geringe Feststoffmengen einarbeiten.

Die erfindungsgemäße Zusammensetzung eignet sich hervorragend als Dispergiermedium. Der Begriff "Dispergiermedium" wie er hierin verwendet wird steht für die kontinuierliche, das heißt flüssige Phase eines Mahlguts, die Lösemittel (hierin entsprechend Komponente (A)) und Dispergiermittel (hierin entsprechend Komponente (B)) und gegebenenfalls weitere mahlguttypische Additive (hierin entsprechend Komponente (C)) enthält. Im Dispergiermedium lassen sich weitere Mahlgutbestandteile wie beispielsweise Bindemittel dispergieren oder lösen ohne dass solche Bestandteile hierin als zum Dispergiermedium gehörig angesehen werden. Als solche stellt die erfindungsgemäße Zusammensetzung eine vorzugsweise klare homogene Lösung dar, die dem bloßen Auge als kontinuierliche einheitliche Flüssigkeit erscheint.

Da sich die erfindungsgemäßen Zusammensetzungen aus Komponenten (A), (B) und gegebenenfalls (C), als solche bereits hervorragend als Dispergiermedium eignen enthalten diese vorzugsweise keine Phthalate, sind jedoch prinzipiell phthalatverträglich.

### Komponente (A)

Die als Komponente (A) eingesetzten Monocarbonsäureester können aus natürlichen Quellen stammen oder synthetisch durch Veresterung von Fettsäuren, vorzugsweise bei erhöhter Temperatur und erhöhtem Druck, oder chemische oder enzymatische Umesterung von Glyceriden wie beispielsweise Triglyceriden gewonnen werden.

Die korrespondierenden Monocarbonsäuren R¹-COOH, sind gesättigte oder ungesättigte, verzweigte oder geradkettige, aliphatische Monocarbonsäuren mit 12 bis 24, vorzugsweise 12 bis 18, besonders bevorzugt 14 bis 18 und ganz besonders bevorzugt 16 bis 18 Kohlenstoffatomen. Bevorzugt sind geradkettige Monocarbonsäuren.

Geeignete Fettsäuren sind zum Beispiel solche, die sich durch Hydrolyse von Sonnenblumenöl, Sojaöl, Rapsöl, Rüböl, Leinöl, Tallöl, Nussöl, Mohnöl, Distelöl, Mandelöl, Rizinusöl, Kokosnussöl, Kokosöl, Baumwollsamenöl, Fischöl, Obstkemöl, Traubenkemöl, Haselnussöl, Talgfett, Hanfsamenöl, Maisöl, Nerzöl, Senföl, Rinderklauenöl, Olivenöl, Palmöl und Palmkernöl ableiten.

Geignete alkoholische Veresterungskomponenten (R²-OH) sind gradkettige oder verzweigte aliphatische, cycloaliphatische und/oder aromatische Monoalkohole mit 1 bis 13 Kohlenstoffatomen, vorzugsweise maximal 8 Kohlenstoffatomen, besonders bevorzugt 4 Kohlenstoffatomen. Beispiele geeigneter Monoalkohole sind Methanol, Ethanol, Propanol, Butanol, Ethylhexanol, Decanol, Laurylalkohol, Isotridecylalkohol, Monophenylglykol und Benzylalkohol. Bevorzugt sind Methanol, Ethanol, Propanol, Butanol und 2-Ethylhexanol, wobei Methanol besonders bevorzugt ist.

Besonders geeignet sind zum Beispiel Sojamethylester, Rapsölmethylester, Methyltalloat, Methyloleat, Butylstearat, Butyloleat, 2-Ethylhexyloleat, Ethylhexylpalmitat, Ethylhexytstearat, Ethylhexylcocoat, Isotridecylstearat, wobei unter diesen ganz besonders Sojamethylester, Rapsölmethylester und Methyltalloat, Ethylhexylcocoat geeignet sind.

Aus den unter die allgemeine Formel R¹-CO-O-R² (mit den oben genannten Definitionen der Reste R¹ und R²) fallenden Monocarbonsäureestem sind nur solche Verbindungen in den Zusammensetzungen der vorliegenen Erfindung als Komponente (A) einsetzbar, die bei einem Standarddruck von 101,3 kPa einen Siedepunkt größer 250 °C, vorzugsweise größer 280 °C und besonders bevorzugt größer 300 °C besitzen. Liegt der Siedepunkt bei 250 °C oder darunter, so sind diese Stoffe als VOC zu betrachten.

Derartige Verbindungen stellen zumeist Handelsprodukte dar, die häufig nicht in reiner Form vorliegen, sondern die Gemische von Verbindungen ähnlicher Struktur darstellen.

### Komponente (B)

Bei Komponente (B) handelt es sich um ein oder mehrere Dispergiermittel, das heißt grenzflächenaktive Substanzen, die das Dispergieren eines pulver- oder faserförmigen Stoffes, beispielsweise eines Pigmentes oder eines Füllstoffs erleichtern, indem sie die Grenzflächenspannung zwischen dem pulver- oder faserförmigen Stoff und dem diesen umgebenden Medium erniedrigen. Durch Dispergiermittel wird das Aufbrechen der in Form von Agglomeraten vorliegenden-Sekundärteilchen der pulverförmigen Stoffe in Primärteilchen erleichtert und eine Reagglomeration gehemmt. Eignen sich die Dispergiermittel auch zur Benetzung der Teilchen, so spricht man von Netz- und Dispergiermitteln. Diese sind somit vom Begriff des Dispergiermittels ebenfalls umfasst.

Bei den Dispergiermitteln handelt es sich um solche, die eine oder mehrere pigment- und/oder füllstoffaffine Gruppen X aufweisen und somit kovalent, ionisch und/oder durch Physisorption an die Pigment- oder Füllstoffoberfläche binden. Im Übrigen bewirken sie eine Stabilisierung der Pigment- und Füllstoffprimärteilchen und verhindern somit eine Agglomeration, die sonst zur Sedimentation der Feststoffe und somit Separation des Mahlgutsystems bzw. eines Farbkonzentrats führt. Für diese Stabilisierung sind in der Regel ein oder mehrere Gruppen Y im Dispergiermittel verantwortlich, die für die Verträglichkeit mit dem umgebenden Medium sorgen.

Neben einfachen, niedermolekularen Verbindungen wie z.B. Lecithin, Fettsäuren und deren Salzen und Alkylphenolethoxylaten werden auch komplexe Strukturen als Dispergiermittel eingesetzt.

Bevorzugt handelt es sich bei eingesetzten Dispergiermitteln um höhermolekulare Dispergiermittel, insbesondere polymere Dispergiermittel auf Basis von funktionellen Polymeren, vorzugsweise mit einer zahlenmittleren Molekularmasse (Mₙ) von mindestens 400 g/mol, vorzugsweise mindestens 800 g/mol, bevorzugt mindestens 2000 g/mol. Das maximale Molekulargewicht Mₙ liegt zweckmäßig bei 100000 g/mol, bevorzugt bei 50000 g/mol und besonders bevorzugt bei 25000 g/mol. Die zahlenmittleren Molekulargewichte sind mittels Gelpermeationschromatographie gegen ein Polystyrol-Standard bestimmbar.

Insbesondere kann das erfindungsgemäss eingesetzte Dispergiermittel ausgewählt sein aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder gegebenenfalls versalzten Polyaminen, Epoxid-Amin-Addukten, Phosphorsäureestem insbesondere von Polyethern, Polyestern und Polyether-Estern, basischen oder sauren Ethoxylaten wie alkoxylierten Mono- oder Polyaminen oder sauren 1,2-Dicarbonsäureanhydridhalbestem von alkoxylierten Monoalkoholen, Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen; Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen und/ oder aminofunktionellen Polyestern, Polyphosphaten sowie deren Mischungen.

Bevorzugt werden als Dispergiermittel insbesondere solche Verbindungen ausgewählt, wie sie in den Druckschriften, EP 0 154 678 B1, EP 0 270 126 B1, EP 318 999 B1, EP 0 417 490 B1, EP 0 879 860 B1, EP 0 893 155 B1. EP 1081 169 B1. EP 1416 019 A1, EP 1486 524 A1, EP 1593 700 B1, EP 1640 389 A1, EP 1650 246 A1, EP 1742 990, EP 1803 753, EP 1837 355, DE 102006048144, DE 102006062439, DE 102006062440, DE 102006062441 und DE 102007005720 beschrieben sind, besonders bevorzugt sind die in der EP 0 893 155 B1 beanspruchten Dispergiermittel.

Polymere Dispergiermittel auf der Basis von Polyisocyanaten sind z. B. in der EP 0 154 678, der EP 318 999 und der EP 0 438 836 beschrieben. Diese Produkte werden durch Addition von Monohydroxyverbindungen, diisocyanatfunktionellen Verbindungen und Verbindungen mit einer tertiären Aminogruppe an die vorliegenden NCO-Gruppen von Isocyanurat-, Biuret-, Urethan- und/oder Allophanatgruppen aufweisenden Polyisocyanaten hergestellt.

In einer bevorzugten Ausführungsform werden als Komponente (B) Dispergiermittel eingesetzt, die erhältlich sind durch Versalzung einer aminfunktionellen Verbindung mittels einer Säure, wobei als aminfunktionelle Verbindung ein Polyamin mit zumindest drei Aminogruppen aus der Gruppe "nicht-modifizierte, aliphatische lineare oder verzweigte Polyamine der Gruppe: "Diethylentriamin, Triethylentetramin, Tetraethylenpentamin, Pentaethylenhexamin, Hexamethylenheptamin, höhere lineare Polymerisate der allgemeinen Formel NH₂-(C₂H₄NH)ₙ-C₂H₄-NH₂ mit n>5, wobei bei diesen Protonen am Stickstoff gegen Alkyl-, Aryl- und/oder Aralkylgruppen ausgetauscht sein können und/oder der Stickstoff quatemisiert vorliegen kann, verzweigte (C₂-C₄)-Alkylenamine und Poly(C₂-C₄)alkylenimine mit tertiären Aminogruppen und einem zahlenmittleren Molekulargewicht bis zu 1000000 g/mol oder eine Mischung solcher Amine"; modifizierte Polyamine auf Basis der vorgenannten nicht-modifizierten Polyamine, wobei es sich bei diesen um mit Mono- oder Polyisocyanaten, die v NCO-Gruppen besitzen von denen (v-1) NCO-Gruppen vorher mit anderen Reaktanden reagiert haben, umgesetzte Polyamine, mit epoxyfunktionellen Stoffen umgesetzte Polyamine, mit cyclischen Carbonaten umgesetzte Polyamine, mittels einer Michael-Reaktion mit α,β-ungesättigten Verbindungen umgesetzte Polyamine, alkylierte und/oder quaternisierte Polyamine und/oder mit Carbonsäuren amidierte Polyamine handelt, mit der Maßgabe, daß nach der Modifikation noch drei versalzbare Aminogruppen pro Molekül vorhanden sind, oder eine Mischung solcher Polyamine und/oder Polyamine der Gruppe: "Homo- oder Copolymerisate von aminfunktionellen (Meth)acrylaten oder Vinylverbindungen, sowie aminfunktionelle Homo- oder Copolymere deren Aminogruppe mittels polymeranaloger Reaktion in das vorgefertigte Polymer eingefügt oder an diesem Polymer erzeugt wurde, oder eine Mischung solcher Polyamine", wobei das Homo- oder Copolymerisat ein zahlenmittleres Molekulargewicht von bis zu 1000000 g/mol aufweist" verwendet wird und wobei als Säure ein Stoff aus der Gruppe "Phosphorsäureester der allgemeinen Formel: (OH)₃. ₙPO(OR^{a})ₙ mit n = 1 oder 2, Sulfonsäuren der allgemeinen Formel HOSO₂R^{b}, saure Schwefelsäureester der allgemeinen Formel HOSO₃R^{b}", wobei R^{a} und R^{b} einen Alkyl-, Aryl- oder Aralkylrest mit mindestens 5 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und/oder einer Urethangruppe mit einem zahlenmittleren Molekulargewicht zwischen 100 und 5000 g/mol darstellt, oder eine Mischung solcher Stoffe, wobei R^{a} und R^{b} gleich oder verschieden sind und gegebenenfalls Wasserstoffatome in den aliphatischen Gruppen der Reste R^{a} und R^{b} teilweise durch Halogenatome ersetzt sind und die Säure gegebenenfalls weitere, sich bei der Versalzung inert verhaltende funktionelle Gruppen trägt, verwendet wird; und pro Molekül mindestens eine Aminogruppe versalzt ist.

Folgende Gruppen von Dispergiermitteln zeigen eine besonders gute Wirkung in den erfindungsgemäßen Dispersionen: (a) Phosphorestersalze von aminogruppen haltigen Oligomeren oder Polymeren, wie beispielsweise Phosphorestersalze von gegebenenfalls fettsäuremodifizierten oder alkoxylierten (insbesondere ethoxylierten) Polyaminen, Phosphorestersalze von Epoxid-Polyamin-Addukten, Phosphorestersalze von aminogruppenhaltigen Acrylat- oder Methacrylatcopolymeren und Phosphorestersalze von Acrylat-Polyamin-Addukten, (b) Mono- oder Diester der Phosphorsäure, wie beispielsweise Mono- oder Diester der Phosphorsäure mit Alkyl, Aryl-, Aralkyl- oder Alkylaryl-Alkoxylaten (z.B. Phosphorsäuremono- oder diester von Nonylphenolethoxylaten, Isotridecylalkoholethoxylaten, butanolgestarteten Alkylenoxidpolyethem), Mono- oder Diester der Phosphorsäure mit Polyestern (z. B. Ladonpolyestern, wie Caprolactonpolyestern oder gemischten Caprolacton/Valerolacton-Polyestern), (c) sauere Dicarbonsäurehalbester, beispielsweise sauere Dicarbonsäurehalbester (insbesondere der Bernsteinsäure, Maleinsäure oder Phthalsäure) mit Alkyl, Aryl-, Aralkyl- oder Alkylaryl-Alkoxylaten (z.B. Nonylphenolethoxylaten, Isotridecylalkoholethoxylaten oder butanolgestarteten Alkylenoxidpolyethern), (d) Polyurethan-Polyamin-Addukte, (e) polyalkoxylierte Mono- oder Diamine (z.B. ethyoxyliertes Oleylamin oder alkoxyliertes Ethylendiamin) (f) Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen.

Derartige Dispergiermittel sind als Handelsprodukte zum Beispiel von der Firma BYK-Chemie aus Wesel unter den Handelsbezeichnungen BYK-220 S, BYK-9076, BYK-9077, BYK-P 104, BYK-P 104 S, BYK-P 105, BYK-W 9010, BYK-W 920, BYK-W 935, BYK-W 940, BYK-W 960, BYK-W 965, BYK-W 966, BYK-W 975, BYK-W 980, BYK-W 990, BYK-W 995, BYK-W 996, BYKUMEN, LACTIMON, ANTI-TERRA-202, ANTI-TERRA-203, ANTI-TERRA-204, ANTI-TERRA-205, ANTI-TERRA-206, ANTI-TERRA-207, ANTI-TERRA-U 100, ANTI-TERRA-U 80, ANTI-TERRA-U, DISPERBYK, DISPERBYK-101, DISPERBYK-102, DISPERBYK-103, DISPERBYK-106, DISPERBYK-107, DISPERBYK-108, DISPERBYK-109, DISPERBYK-110, DISPERBYK-111, DISPERBYK-112, DISPERBYK-115, DISPERBYK-116, DISPERBYK-130, DISPERBYK-140, DISPERBYK-142, DISPERBYK-145, DISPERBYK-160, DISPERBYK-161, DISPERBYK-162, DISPERBYK-163, DISPERBYK-164, DISPERBYK-165, DISPERBYK-166, DISPERBYK-167, DISPERBYK-168, DISPERBYK-169, DISPERBYK-170, DISPERBYK-171, DISPERBYK-174, DISPERBYK-176, DISPERBYK-180, DISPERBYK-181, DISPERBYK-182, DISPERBYK-183, DISPERBYK-184, DISPERBYK-185, DISPERBYK-187, DISPERBYK-190, DISPERBYK-191, DISPERBYK-192, DISPERBYK-193, DISPERBYK-194, DISPERBYK-2000, DISPERBYK-2001, DISPERBYK-2009, DISPERBYK-2010, DISPERBYK-2020, DISPERBYK-2025, DISPERBYK-2050, DISPERBYK-2070, DISPERBYK-2090, DISPERBYK-2091, DISPERBYK-2095, DISPERBYK-2096, DISPERBYK-2150, DISPERBYK-2155, DISPERBYK-2163, DISPERBYK-2164, DISPERPLAST-1010, DISPERPLAST-1011, DISPERPLAST-1012, DISPERPLAST-1018, DISPERPLAST-1, DISPERPLAST-P erhältlich. Soweit eine VOC-Freiheit erwünscht ist, sollten die obengenannten Handelsprodukte möglichst als lösemittefreie Wirksubstanz eingesetzt werden und gegebenenfalls zum Beispiel durch Destillation von flüchtigen Bestandteilen befreit werden.

Bevorzugt werden Dispergiermedien, die mit Gemischen verschiedener Dispergiemnittel hergestellt werden, da sich diese Zusammensetzungen in der Regel durch eine besonders breite Verträglichkeit und hohe Einsatzbreite hinsichtlich der verwendbaren Feststoffe und Polymere auszeichnen.

Durch Variation der pigment- und/oder füllstoffaffinen Gruppen X einerseits und der die Verträglichkeit gegenüber dem Medium herstellenden Gruppen Y andererseits, deren Mengenverhältnissen und/oder deren Molekulargewichten kann die Verträglichkeit der erfindungsgemäßen Dispergiermittel auf die unterschiedlichsten Lösemittel, Trägermedien, Bindemittel, Harze, Feststoffe und gegebenenfalls weitere polymere Verbindungen abgestimmt werden, welche in Überzugs- und Formmassen vorliegen, in denen die Zubereitungen gemäß der Erfindung zur Anwendung kommen.

Für den Einsatz in hochpolaren Systemen sollten die Gruppen Y einen ausreichend hohen Anteil an polaren Gruppen wie z.B. Polyethylenoxiden enthalten, um eine für den jeweiligen Einsatzbereich ausreichende Polarität zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt.

Beim Einsatz in unpolaren Systemen wie Langölalkydlacken, PVC-Plastisolen oder Polyolefinen sollte vorzugsweise ein entsprechender Anteil an unpolaren Gruppen vorliegen und beim Einsatz in Systemen, bei denen eine breite Verträglichkeit wichtig ist, wie z. B. Pigmentkonzentraten, ist eine ausgewogene Kombination von polaren und unpolaren Gruppen von Vorteil.

Wenn die Zubereitungen z. B. in einem Polyurethanharz oder in einem Lack, dessen Bindemittel ein Polyurethan ist, eingesetzt werden, ist es zweckmäßig, solche Dispergiermittel einzusetzen, die in ihrem Molekül auch Urethangruppen oder ähnliche Gruppen enthalten, die - wie dem Fachmann bekannt ist - mit Polyurethanen verträglich sind. Das gleiche gilt sinngemäß für z. B. Polyacrylate, Polyester, Alkydharze und alle anderen Polymerklassen.

Sinngemäß gilt dies auch für die Gruppen die von besonderem Einfluß auf die Affinität der erfindungsgemäßen Additionsverbindungen zu den verwendeten Feststoffen sind, die dispergiert werden sollen.

Die Dispergiermittel können alleine oder zusammen mit nach dem Stand der Technik üblichen weiteren Hilfsmitteln eingesetzt werden.

Die Dispergiermittel werden im allgemeinen in einer Menge von 0,5 bis 100 Gew. %, bezogen auf den zu dispergierenden Feststoff, eingesetzt. Zur Dispergierung spezieller Feststoffe können aber auch höhere Mengen der Dispergiermittel notwendig sein.

Die Menge an Dispergiermittel ist im wesentlichen abhängig von der zu belegenden Oberfläche des zu dispergierenden Feststoffes. Ruß benötigt z.B. wesentlich größere Dispergiermittelmengen als z.B. Titandioxid.

Die erfindungsgemäßen Zusammensetzungen können als Dispersionsmedium zur Dispergierung unterschiedlichster pulver- oder faserförmiger Feststoffe eingesetzt werden. Daher ist weiterer Gegenstand der vorliegenden Erfindung die Verwendung der erfindungsgemäßen- Zusammensetzungen als Dispergiermedium für pulver- und/oder faserförmige Feststoffe, insbesondere derartige Pigmente und Füllstoffe. Die zu verwendende Menge der erfindungsgemäßen Zusammensetzung richtet sich nach deren Gehalt an Komponente (B), d.h. des Dispergiermittels und der oben angesprochenen Oberfläche des zu diespergierenden Feststoffs.

Beispiele für pulver- oder faserförmige Feststoffe sind insbesondere organische und anorganische Pigmente, die in Anstrichmitteln, Überzugsmitteln, Formmassen oder sonstigen Kunststoffen eingesetzt werden, und anorganische oder organische Füllstoffe, die zum Füllen oder Verstärken von Anstrichmitteln, Überzugsmitteln, Formmassen oder sonstigen Kunststoffen eingesetzt werden. Eine Untergruppe derartiger Füllstoffe sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-, Dioxazin- oder Thiazin-Pigrnente, Diketo-pyrrolo-pyrrole, Phthalocyanine und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente auf Basis von Ruß, Graphit, Titandioxid, Zinkoxid, Zinksulfid, Zinkphosphat, Bariumsulfat, Lithopone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden von Nickel, Titan, Zink, Mangan, Cobalt, Eisen, Chrom, Antimon, Magnesium, Aluminium (beispielsweise Nickeltitangelb oder Chromtitangelb), magnetische Pigmente auf Basis von Reineisen, Eisenoxiden und Chromoxiden oder Mischoxiden, Metalleffektpigmente wie Aluminiumbronzen, Perlglanzpigmente, fluoreszierende und phosphoreszierende Leuchtpigmente.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126.

Des Weiteren lassen sich auch mineralische Füllstoffe, wie beispielsweise Calciumoxid aber auch Flammschutzmittel wie z.B. Magnesiumhydroxid dispergieren. Mattierungsmittel lassen sich ebenfalls hervorragend dispergieren und stabilisieren.

Weitere Beispiele dispergierbarer Feststoffe sind Stabilisatoren und Treibmittel, welche zwecks besserer Handhabung in ein flüssiges Konzentrat überführt werden sollen, wie zum Beispiel Azodicarbonamid (ADC), ein organisch-chemisches Treibmittel für die Herstellung von geschäumten Polymeren, das hauptsächliche Verwendung findet beim Aufschäumen von PVC-Plastisolen, thermoplastischen Kunststoffen, wie Hart- und Weich-PVC, Polystyrol (PS), Pfropfcopolymerisate von Acrylnitril und Styrol auf Butadienkautschuke, auch als ABS-Polymerisate bekannt, Polyethylen (PE), Polyppropylen (PP), Ethylenvinylacetat (EVA) und Natur- und Synthesekautschuken, wie Styrol-Butadien-Kautschuk (SBR), Ethylen-Propylen-Dien-Kautschuk (EPDM), Nitril Butadiene Rubber (NBR), Chloropren-Kautschuk (CR).

Weiterer Gegenstand der vorliegenden Erfindung ist ein Mahlgut, welches erhältlich ist durch Dispergieren eines oder mehrerer pulver- und/oder faserförmiger Feststoffe in der erfindungsgemäßen Zusammensetzung. Dieser Dispergiervorgang kann in Gegenwart weiterer Substanzen, wie beispielsweise Bindemittel erfolgen, wobei die Bindemittel vorzugsweise vor oder während des Dispergierens des oder der Feststoffe in der erfindungsgemäßen Zusammensetzung (d.h. dem Dispergiermedium) dispergiert, emulgiert oder gelöst werden. So erhaltene Mahlgüter zeichnen sich durch hohe Festkörpergehalte aus. Derartige Mahlgüter sind vorzugsweise frei von flüchtigen organischen Verbindungen.

Die erfindungsgemäßen Mahlgüter lassen sich vorzugsweise bei der Herstellung von Lacken und thermoplastischen oder duroplastischen Kunststoffen einsetzen. Beispiele für thermoplastische Kunststoffe sind Polyolefine, Acrylharze, Styrolpotymere, Polycarbonate, Polyamide, Polyester, thermoplastische Polyurethane, Polyethersulfone, Polysulfone, Vinylpolymere wie Polyvinylchlorid oder deren Mischungen, wobei PVC-Plastisole besonders geeignet sind. Auch Mischungen der vorgenannten thermoplastischen Kunststoffe sind einsetzbar. Beispiele für geeignete duroplastische Kunststoffe sind ungesättigte Polyester, Epoxidharze und Polyurethane oder deren Mischungen.

Daher ist weiterer Gegenstand der Erfindung auch die Verwendung die erfindungsgemäßen Mahlgüter zur Herstellung von Lacken und thermoplastischen oder duroplastischen Kunststoffen.

### BEISPIELE

Im Folgenden wird die Erfindung anhand von Beispielen veranschaulicht. Bei molekular uneinheitlichen Substanzen stellen die angegebenen Molekulargewichte Durchschnittswerte des Zahlenmittels dar (was im Übrigen, sofern nicht anders vermerkt, für die gesamte Beschreibung gilt). Die zahlenmittleren Molekulargewichte Mₙ können per Gelpermeationschromatographie gegen einen Polystyrotstandard bestimmt werden. Sofern nicht anders ausgeführt, handelt es sich bei Teilen um Gewichtsteile und bei Prozenten um Gewichtsprozente.

### Komponente (A)- Monocarbonsäureester

In den folgenden Beispielen werden als Monocarbonsäureester der Komponente (A) Rapsölmethylester (RME), Sojamethylester (SME), Ethylhexylcocoat (EHC) und Methyltalloat (MT) eingesetzt. Alle vorgenannten Ester besitzen einen Siedepunkt über 300 °C.

### Komponente (B) - Dispergiermittel

Sofern bei den nachfolgenden Dispergiermittel-Beispielen bedingt durch den Herstellprozess noch flüchtige Lösemittel enthalten waren, wurden diese vor der erfindungsgemäßen Verwendung durch Vakuumdestillation soweit wie möglich entfernt, so daß der Rest-Gehalt an flüchtigen Komponenten unter 1% lag. Tabelle 1 führt die in den Anwendungsbeispielen eingesetzten Dispergiermittel auf.

**Tabelle 1**

| **(B)** | **Stoffliche Zusammensetzung** |
|---|---|
| B1 | Phosphorestersalz eines Polyamins, Herstellungsbeispiel 5 der EP 893155 |
| B2 | Phosphorestersalz eines Polyamins, Herstellungsbeispiel 7 der EP 893155 |
| B3 | Phosphorestersalz eines Polyamins, Herstellungsbeispiel 10 der EP 893155 |
| B4 | Phosphorestersalz eines Polyamins, Herstellungsbeispiel 12 der EP 893155 |
| B5 | Phosphorestersalz eines Polyamins, Herstellungsbeispiel 14 der EP 893155 |
| B6 | Phosphorestersalz eines fettsäuremodifizierten Polyamins, Herstellungsbeispiel 16 der EP 893155 |
| B7 | Phosphorestersalz eines fettsäuremodifizterten Polyamins, Herstellungsbeispiel 19 der EP 893155 |
| B8 | Phosphorestersalz eines Epoxid-Polyaminadduktes, Herstellungsbeispiel 24 der EP 893155 |
| B9 | Phosphorestersalz eines aminogruppenhaltigen Acrylatcopolymeren, Herstellungsbeispiel 25 der EP 893155 |
| B10 | Phosphorestersalz eines ethoxylierten Polyamins, Herstellungsbeispiel 26 der EP 893155 |
| B11 | Phosphorestersalz eines Acrylat-Polyaminadduktes, Herstellungsbeispiel 28 der EP 893155 |
| B12 | Phosphorestersalz eines Epoxid/Aminadduktes, Herstellungsbeispiel 6 der EP1486524 |
| B13 | Fettsäurekondensat eines Epoxid/Aminadduktes, Herstellungsbeispiel 11 der EP1486524 |
| B14 | Phosphorsäuremonoester eines Nonylphenolethoxylates mit 5 EO (=Ethlyenoxideinheiten) |
| B15 | Phosphorsäuremono/diester eines Nonylphenolethoxylates mit 10 EO |
| B16 | Phosphorsäuremonoester eines Isotridecylalkoholethoxylates mit 10 EO |
| B17 | Phosphorsäuremonoester eines Butanolgestarteten PO-Polyethers mit Mₙ 700 (PO = Propylenoxid) |
| B18 | Phosphorsäuremonoester eines Caprolactonpolyesters, Herstellungsbeispiel 1 der EP 417490 |
| B19 | Phosphorsäuremono/diester eines Caprolactonpolyesters, Herstellungsbeispiel 2 der EP 417490 |
| B20 | Phosphorsäuremonoester eines Caprolactonpolyesters, Herstellungsbeispiel 8 der EP 417490 |
| B21 | Phosphorsäuremonoester eines Caprolactonpolyesters, Herstellungsbeispiel 12 der EP 417490 |
| B22 | mit 1 mol Maleinsäureanhydrid pro mol Fettsäure maleinisierte Sonnenblumenfettsäure |
| B23 | mit 1 mol Maleinsäureanhydrid pro mol Fettsäure maleinisierte Sonnenblumenfettsäure, mit 1 mol Oleylamin weiter umgesetzt |
| B24 | ethoxyliertes Oleylamin mit 10 mol EO |
| B25 | ethoxyliertes Oleylamin mit 2 mol EO |
| B26 | mit 60 mol PO und 30 mol EO alkoxyliertes Ethylendiamin |
| B27 | saurer Bemsteinsäurehalbester eines Isotridecylalkoholethoxylates mit 10 EO |
| B28 | saurer Maleinsäurehalbester eines Butanolgestarteten PO-Polyethers mit Mₙ 1100 |
| B29 | saurer Phthalsäurehalbester eines Nonylphenolethoxylates mit 7 EO |
| B30 | Polyurethan-Polyamin-Addukt, Herstellungsbeispiel 1 der EP 1593700 |
| B31 | Polyurethan-Polyamin-Addukt, Herstellungsbeispiel 14 der EP 1593700 |
| B32 | Polyurethan-Polyamin-Addukt, Herstellungsbeispiel 23 der EP 1593700 |

### Erfindungsgemäße Zusammensetzungen

Die erfindungsgemäßen Zusammensetzungen wurden durch einfaches Mischen der Komponenten (A) und (B) erhalten. In Tabelle 2 sind die Zusammensetzungen aus Komponente (A) und (B) angegeben. Die Zusammensetzungen bestehen ausschließlich aus Komponenten (A) und (B). Die Prozentangaben sind Gew.-% bezogen auf die Gesamtzusammensetzung.

**Tabelle 2**

| **Beispiel** | **Komponente (A)** | **Komponente (B)** |
|---|---|---|
| Z1 | 90 % RME | 10 % B1 |
| Z2 | 95 % SME | 5 % B2 |
| Z3 | 80 % EHC | 20 % B3 |
| Z4 | 90 % RME | 5 % B4 + 5% B24 |
| Z5 | 85 % EHC | 15 % B5 |
| Z6 | 92 % RME | 4 % B6 + 4 % B22 |
| Z7 | 91 % SME | 3 % B7 + 3 % B18 + 3 % B29 |
| Z8 | 92 % MT | 3 % B8 + 3 % B17 + 2 % B28 |
| Z9 | 93 % SME | 3 % B9 + 3 % B26 |
| Z10 | 95 % RME | 3 % B10 + 2 % B23 |
| Z11 | 92 % SME | 5 % B11 + 3 % B27 |
| Z12 | 88 % MT | 6 % B12 + 4 % B14 + 2 % B25 |
| Z13 | 90 % RME | 5 % B13 + 2 % B15 + 3 % B19 |
| Z14 | 92 % RME | 3 % B16 + 5 % B30 |
| Z15 | 92 % EHC | 3 % B20 + 5 % B31 |
| Z16 | 94 % RME | 3 % B21 + 3 % B15 |
| Z17 | 93% SME | 7 % B23 |
| Z18 | 93% RME | 3.5% B11 + 3.5% B26 |
| Z19 | 90% MT | 10% B29 |
| Z20 | 90% SME | 10% B32 |
| Z21 | 92% RME | 8% B27 |
| Z22 | 85% SME | 15% B30 |
| Z23 | 68% SME | 16% B11 + 16% B26 |
| Z24 | 30% SME | 35% B11 + 35% B26 |
| Z25 | 50% SME | 25% B11 + 25% B26 |

| | | |
|---|---|---|
| Legende: RME = Rapsölmethylester , Sdp > 300°C; VOC-frei SME = Sojamethylester, Sdp> 300 °C; VOC-frei EHC = Ethylhexylcocoat, Sdp > 300°C; VOC-frei MT = Methyltalloat, Sdp > 300°C; VOC-frei | | |

Alle oben genannten erfindungsgemäßen Zusammensetzungen besitzen eine Brookfield-Viskosität von unter 500 mPas (bei 25 °C) und sind frei von flüchtigen organischen Verbindungen (VOC).

### Anwendungsbeispiele

Zur Beurteilung der erfindungsgemäßen Dispergiermedien wurden damit Feststoffkonzentrate verschiedener organischer und anorganischer Feststoffe hergestellt und mit Konzentraten nach dem Stand der Technik in phthalathaltigem Weichmacher (DINP = Diisononylphthalat, DIDP = Diisodecylphthalat) oder reinem Fettsäuremethylester (SME. = Sojamethylester) verglichen. Als Feststoffe wurden Titandioxid (z. B. Ti-Pure^{®} R 900, Rutil, von DuPont), Ruß (CI Black 7-77266, Regular Colour Fumace Black, z. B. Spezialschwarz 4 von Degussa) und ADC (= Azodicarbonamid, z. B. ADC Porofor^{®} ADC/M-C1 von Lanxess) verwendet.

### Dispergierbedingungen:

Die Titandioxid-Pasten und die ADC-Pasten wurden durch 5-minütiges Dispergieren des Pigments im Dispergiermedium bei 8000 Umdrehungen pro Minute mittels eines Dispergierapparats (Dispermat FE von Getzmann) hergestellt.

Die Rußpasten wurden mittels 3 Passagen auf einem Bühler Dreiwalzwerk SDY hergestellt.

Die jeweiligen Gewichtsverhältnisse von Dispergiermedium und Pigment sind in den Tabellen 3, 4 und 5 angegeben.

### Viskosiätsmessbedingungen:

Die Viskositäten der Pigmentkonzentrate wurden mit einem Viskosimeter des Typs Haake RS 1 nach 24 Stunden bei 23 °C gemessen (Z 10 DIN, D (sec⁻¹): 400).

### ADC-Konzentrate:

**Tabelle 3**

| **Beispiel-Nr.** | **Dispergiermedium** | **%** | **Pigment. %** | **Viskosität mPas** | **Separation*** | **Bodensatz*** |
|---|---|---|---|---|---|---|
| 1 | DINP** | 60 | 40 | 905 | wenig | ja |
| 2 | SME** | 60 | 40 | 150 | viel | ja |
| 3 | DIN** | 40 | 60 | nicht herstellbar | | |
| 4 | SME** | 40 | 60 | nicht herstellbar | | |
| 5 | Z17 | 35 | 65 | 1405 | sehr wenig | nein |
| 6 | Z18 | 35 | 65 | 1145 | sehr wenig | wenig |
| 7 | Z17 | 30 | 70 | 2390 | sehr wenig | nein |
| 8 | Z18 | 30 | 70 | 2351 | sehr wenig | wenig |
| 9 | Z19 | 40 | 60 | 1181 | nein | nein |
| 10 | Z20 | 30 | 70 | 2359 | nein | nein |

| | | | | | | |
|---|---|---|---|---|---|---|
| *: Aussehen nach 5 Tagen Lagerung **: nicht erfindungsgemäß | | | | | | |

Wie Tabelle 3 entnehmbar ist, zeigen die erfindungsgemäßen Beispiele selbst nach 5-tägiger Lagerung keine oder nur geringe Neigung zu Bodensatzbildung bzw. Separation des Systems. Erfindungsgemäße Mahlgüter mit einem Pigmentgehalt von 60 Gew.-% und mehr können erhalten werden und zeigen gute Verarbeitungsviskositäten, während die Konzentrate der nicht erfindungsgemäßen Beispiele 3 und 4 bei einem Gewichtsanteil von 60 Gew.% Pigment nicht mehr verarbeitbar sind. Die zwar herstellbaren Konzentrate der nicht erfindungsgemäßen Beispiele 1 und 2 besitzen hingegen keine Lagerstabilität.

### Titandioxid-Konzentrate:

**Tabelle 4**

| **Beispiel-Nr.** | **Dispergiermedium** | **%** | **Pigment %** | **Viskosität mPas** | **Separation*** | **Bodensatz*** |
|---|---|---|---|---|---|---|
| 11 | DINP** | 60 | 40 | 1698 | wenig | ja |
| 12 | DIN** | 40 | 60 | nicht herstellbar | | |
| 13 | Z21 | 20 | 80 | 580 | sehr wenig | nein |
| 14 | Z17 | 20 | 80 | 1844 | nein | nein |
| 15 | Z16 | 35 | 65 | 1780 | nein | nein |

| | | | | | | |
|---|---|---|---|---|---|---|
| *: Aussehen nach 5 Tagen Lagerung **: nicht erfindungsgemäß | | | | | | |

In Tabelle 4 zeigt ein Vergleich der erfindungsgemäßen Beispiele 14 und 15 gegenüber dem nicht erfindungsgemäßen Beispiel 11, dass bei ähnlicher Viskosität deutlich höhere Pigmentgehalte im Konzentrat erreichbar sind. Darüber hinaus sind die Konzentrate der erfindungsgemäßen Beispiele 14 und 15 gegenüber Beispiel 11 lagerstabil, d.h sie zeigen weder Separation noch einen Bodensatz nach 5-tägiger Lagerung. Beispiel 13 zeigt besonders beeindruckend, dass trotz extrem hohem Pigmentgehalt (80 Gew.-%) Viskositäten erreichbar sind, die weit unterhalb der Viskositäten der Vergleichsversuche liegen.

### Ruß-Konzentrate:

**Tabelle 5**

| **Beispiel-Nr.** | **Dispergiermedium** | **%** | **Pigment %** | **Viskosität mPas** | **Separation*** | **Bodensatz*** |
|---|---|---|---|---|---|---|
| 16 | DIDP** | 80 | 20 | 1179 | nein | nein |
| 17 | DINP** | 65 | 35 | nicht herstellbar | | |
| 18 | Z18 | 65 | 35 | 488 | nein | nein |
| 19 | Z22 | 65 | 35 | 418 | nein | nein |
| 20 | Z23 | 60 | 40 | 872 | nein | nein |
| 21 | Z24 | 60 | 40 | 4173 | nein | nein |
| 22 | Z25 | 60 | 40 | 2277 | nein | nein |

| | | | | | | |
|---|---|---|---|---|---|---|
| *: Aussehen nach 5 Tagen Lagerung. **: nicht erfindungsgemäß, DIDP = Diisodecylphthalat | | | | | | |

Tabelle 5 läßt sich entnehmen, dass in herkömmlichen Dispergiermedien (DIDP, DINP) nur relativ geringe Rußmengen einarbeitbar sind. Die erfindungsgemäßen Mahlgüter (Konzentrate) enthalten einen weithöheren Rußanteil bei hervorragenden bis guten Viskositäten.

## Patentansprüche

1. Verwendung eines Mahlguts, das erhältlich ist durch Dispergieren eines oder mehrerer pulver- und/oder faserförmiger Feststoffe in einem Dispergiermedium enthaltend als
Komponente (A): 10 bis 97 Gew.-% bezogen auf das Gesamtgewicht des Dispergiermediums eines oder mehrerer Monocarbonsäureester der allgemeinen Formel R¹-CO-OR , worin R¹ für eine gesättigte oder ungesättigte, verzweigte oder geradkettige, aliphatische Gruppe mit 11 - bis 23 Kohlenstoffatomen steht und R² für eine verzweigte oder geradkettige aliphatische, eine cycloaliphatische oder aromatische Gruppe mit 1 bis 13 Kohlenstoffatomen steht- und die Summe der Kohlenstoffatome der Gruppen R¹ und R² maximal 30 beträgt, wobei der oder die Monocarbonsäureester bei einem Standarddruck von- 101,3- kPa einen Siedepunkt größer 250°C besitzen und als
Komponente (B): 3 bis 90 Gew.-% bezogen auf das Gesamtgewicht des Dispergiermediums eines oder mehrerer Dispergiermittel,
wobei das Dispergiermedium eine Viskosität bei 25°C von kleiner 5000 mPas besitzt zur Herstellung von Lacken und thermoplastischen oder duroplastischen Kunststoffen.

2. Verwendung nach Anspruch 1, **dadurch gekennzeichnet, dass** der thermoplastische Kunststoff gewählt wird aus der Gruppe bestehend aus Polyolefinen, Acrylharzen, Styrolpolymeren, Polycarbonaten, Polyamiden, Polyestern, thermoplastischen Polyurethanen, Polyethersulfonen, Polysulfonen, Vinylpolymeren, insbesondere PVC-Plastisolen sowie Mischungen der vorgenannten thermoplastischen Kunststoffe und dass der duroplastische Kunststoff gewählt wird aus der Gruppe bestehend aus ungesättigten Polyestern, Epoxidharzen und Polyurethanen sowie deren Mischungen.

3. Zusammensetzung enthaltend als
Komponente (A): 10 bis 97 Gew.-% bezogen auf das Gesamtgewicht der Zusammensetzung eines oder mehrerer Monocarbonsäureester der allgemeinen Formel R¹-CO-OR², worin R¹ für eine gesättigte oder ungesättigte, verzweigte oder geradkettige, aliphatische Gruppe mit 11 bis 23 Kohlenstoffatomen steht und R² für eine verzweigte oder geradkettige aliphatische, eine cycloaliphatische oder aromatische Gruppe mit 1 bis 13 Kohlenstoffatomen steht und die Summe der Kohlenstoffatome der Gruppen R¹ und R² maximal 30 beträgt, wobei der oder die Monocarbonsäureester bei einem Standarddruck von 101,3 kPa einen Siedepunkt größer 250°C besitzen und als
Komponente (B): 3 bis 90 Gew.% bezogen auf das Gesamtgewicht der Zusammensetzung eines oder mehrerer Dispergiermittel,
wobei die Zusammensetzung eine Viskosität bei 25°C von kleiner 5000 mPas besitzt.

4. Zusammensetzung gemäß Anspruch 3, **dadurch gekennzeichnet, dass** bezogen auf das Gesamtgewicht der Zusammensetzung die Summe der Gewichtsanteile der Komponente (A) und der Komponente (B) mindestens 90 Gew.-% beträgt.

5. Zusammensetzung nach einem der Ansprüche 3 oder 4, **dadurch gekennzeichnet, dass** diese mindestens 75 Gew.-% an Komponente (A) und höchstens 25 Gew.% an Komponente (B) enthält.

6. Zusammensetzung nach einem oder mehreren der Ansprüche 3 bis 5, **dadurch gekennzeichnet, dass** die Zusammensetzung eine Viskosität bei 25°C von kleiner 500 mPas besitzt.

7. Zusammensetzung nach einem oder mehreren der Ansprüche 3 bis 6, **dadurch gekennzeichnet, dass** die Monocarbonsäureester einen Siedepunkt größer 280°C besitzen.

8. Zusammensetzung nach einem oder mehreren der Ansprüche 3 bis 7, **dadurch gekennzeichnet, dass** R¹-CO-O zu einer geradkettigen aliphatischen Monocarbonsäure R²-COOH korrespondiert, welche 14 bis 18 Kohlenstoffatome enthält und/oder R² zu einer alkoholischen Veresterungskomponente R²-OH korrespondiert, welche maximal 8 Kohlenstoffatome, vorzugsweise 1 Kohlenstoffatom enthält.

9. Zusammensetzung nach einem oder mehreren der Ansprüche 3 bis 8, **dadurch gekennzeichnet, dass** Komponente (B) eine oder mehrere der Verbindungen gewählt aus der Gruppe bestehend aus (a) Phosphorestersalzen von aminogruppenhaltigen Oligomeren oder Polymeren, (b) Mono- oder Diestern der Phosphorsäure, (c) saueren Dicarbonsäurehalbestern, (d) Polyurethan-Polyamin-Addukten, (e) polyalkoxylierten Mono- oder Diaminen und (f) Reaktionsprodukte von ungesättigten Fettsäuren mit Mono-, Di- und Polyaminen, Aminoalkoholen, und ungesättigten 1,2-Dicarbonsäuren und deren Anhydriden und deren Salze und Umsetzungsprodukte mit Alkoholen und/oder Aminen umfasst.

10. Zusammensetzung nach einem oder mehreren der Ansprüche 3 bis 9, **dadurch gekennzeichnet, dass** diese eine zusätzliche Komponente (C) enthalten und die Komponente (C) aus einem oder mehreren Additiven besteht, die gewählt werden aus der Gruppe bestehend aus Verlaufmitteln, Filmbildehilfsmitteln, Rheologiehilfsrmitteln, Entschäumern, Haftvermittlern, Lichtschutzmitteln, Bioziden, flüssigen oder löslichen Stabilisatoren und Katalysatoren.

11. Zusammensetzung nach einem oder mehreren der Ansprüche 3 bis 10, **dadurch gekennzeichnet, dass** die Zusammensetzung ein Dispergiermedium ist.

12. Verwendung einer oder mehrerer der Zusammensetzungen aus Ansprüchen 3 bis 11 als Dispergiermedium.

13. Verwendung gemäß Anspruch 12 zur Dispergierung eines oder mehrerer pulver- und/oder faserförmiger Feststoffe.

14. Mahlgut erhältlich durch Dispergieren eines oder mehrerer pulver- und/oder faserförmiger Feststoff im Dispergiermedium des Anspruchs 11.

15. Mahlgut nach Anspruch 14, wobei der pulver- und/oder faserförmige Feststoff gewählt ist aus der Gruppe bestehend aus Pigmenten, Füllstoffen, Mattierungsmitteln, Flammschutzmitteln und Treibmitteln.

## Claims

1. Use of a millbase, which is obtainable by dispersing one or more solids in powder and/or fibre form in a dispersion medium which comprises as
component (A): 10% to 97% by weight, based on the total weight of the dispersion medium, of one or more monocarboxylic esters of the general formula R¹-CO-OR², in which R¹ is a saturated or unsaturated, branched or straight-chain, aliphatic group having 11 to 23 carbon atoms and R² is a branched or straight-chain aliphatic group, a cycloaliphatic group or aromatic group having 1 to 13 carbon atoms, and the sum of the carbon atoms of the groups R¹ and R² is not more than 30, the monocarboxylic ester or esters possessing a boiling point of more than 250°C under a standard pressure of 101.3 kPa, and as
component (B): 3% to 90% by weight, based on the total weight of the dispersion medium, of one or more dispersants,
the dispersion medium possessing a viscosity at 25°C of less than 5000 mPas, for producing paints and thermoplastics or thermosets.

2. Use according to Claim 1, **characterized in that** the thermoplastic is selected from the group consisting of polyolefins, acrylic resins, styrene polymers, polycarbonates, polyamides, polyesters, thermoplastic polyurethanes, polyethersulphones, polysulphones, vinylpolymers, more particularly PVC plastisols, and also mixtures of the aforementioned thermoplastics, and **in that** the thermoset is selected from the group consisting of unsaturated polyesters, epoxy resins and polyurethanes and also mixtures thereof.

3. Composition comprising as
component (A): 10% to 97% by weight, based on the total weight of the composition, of one or more monocarboxylic esters of the general formula R¹-CO-OR², in which R¹ is a saturated or unsaturated, branched or straight-chain, aliphatic group having 11 to 23 carbon atoms and R² is a branched or straight-chain aliphatic group, a cycloaliphatic group or aromatic group having 1 to 13 carbon atoms, and the sum of the carbon atoms of the groups R¹ and R² is not more than 30, the monocarboxylic ester or esters possessing a boiling point of more than 250°C under a standard pressure of 101.3 kPa, and as
component (B): 3% to 90% by weight, based on the total weight of the composition, of one or more dispersants,
the composition possessing a viscosity at 25°C of less than 5000 mPas.

4. Composition according to Claim 3, **characterized in that**, based on the total weight of the composition, the sum of the weight fractions of component (A) and component (B) is at least 90% by weight.

5. Composition according to either of Claims 3 and 4, **characterized in that** it contains at least 75% by weight of component (A) and not more than 25% by weight of component (B).

6. Composition according to one or more of Claims 3 to 5, **characterized in that** the composition possesses a viscosity at 25°C of less than 500 mPas.

7. Composition according to one or more of Claims 3 to 6, **characterized in that** the monocarboxylic esters possess a boiling point of more than 280°C.

8. Composition according to one or more of Claims 3 to 7, **characterized in that** R¹-CO-O corresponds to a straight-chain aliphatic monocarboxylic acid R¹-COOH which contains 14 to 18 carbon atoms, and/or R² corresponds to an alcoholic esterification component R²-OH which contains not more than 8 carbon atoms, preferably 1 carbon atom.

9. Composition according to one or more of Claims 3 to 8, **characterized in that** component (B) comprises one or more of the compounds selected from the group consisting of (a) phosphorus ester salts of amino-containing oligomers or polymers, (b) monoesters or diesters of phosphoric acid, (c) acidic dicarboxylic monoesters, (d) polyurethane-polyamine adducts, (e) polyalkoxylated monoamines or diamines, and (f) reaction products of unsaturated fatty acids with monoamines, diamines and polyamines, amino alcohols, and unsaturated 1,2-dicarboxylic acids and their anhydrides and salts thereof and reaction products with alcohols and/or amines.

10. Composition according to one or more of Claims 3 to 9, **characterized in that** it comprises an additional component (C) and component (C) is composed of one or more additives selected from the group consisting of flow control agents, film-forming additives, rheological additives, defoamers, adhesion promoters, light stabilizers, biocides, liquid or soluble stabilizers and catalysts.

11. Composition according to one or more of Claims 3 to 10, **characterized in that** the composition is a dispersion medium.

12. Use of one or more of the compositions from Claims 3 to 11 as a dispersion medium.

13. Use according to Claim 12 for dispersing one or more solids in powder and/or fibre form.

14. Millbase obtainable by dispersing one or more solids in powder and/or fibre form in the dispersion medium of Claim 11.

15. Millbase according to Claim 14, the solid in powder and/or fibre form being selected from the group consisting of pigments, fillers, matting agents, flame retardants and blowing agents.

## Revendications

1. Utilisation d'une matière à broyer qui est obtenue par dispersion d'une ou plusieurs matières solides sous form pulvérulente ou fibreuse dans un milieu de dispersion, le milieu contenant en tant que
composant (A): 10 à 97 % en poids, par rapport au poids total du milieu de dispersion, d'un ou plusieurs esters des acides monocarboxyliques de formule générale R¹-CO-OR², où R¹ répresente un groupe aliphatique saturé ou non-saturé, linéaire ou ramifié, avec 11 à 23 atomes de carbone, R² représente un groupe aliphatique ramifié ou linéaire, cycloaliphatique ou aromatique avec 1 à 13 atomes de carbone, et la somme des atomes de carbone des groupes R¹ et R² est 30 au maximum, le ou les esters des acides monocarboxyliques ayant un point d'ébullition supérieur à 250 °C à une pression nominale de 101,3 kPa, et en tant que
composant (B): 3 à 90 % en poids, par rapport au poids total du milieu de dispersion, d'un ou plusieurs agents de dispersion,
le milieu de dispersion ayant une viscosité inférieure à 5000 mPas à 25 °C, pour la fabrication des vernis et des matières thermoplastiques ou duroplastiques.

2. Utilisation selon la revendication 1, **caractérisée en ce que** la matière thermoplastique est choisie dans le groupe consistant à polyoléfines, résines acryliques, polymères de styrène, polycarbonates, polyamides, polyesters, polyuréthanes thermoplastiques, polyéthersulfones, polysulfones, vinylpolymères, en particulier plastisols de PVC et mélanges desdites matières thermoplastiques, et **en ce que** la matière duroplastique est choisie dans le groupe consistant à polyesters non-saturés, résines époxy et polyuréthanes et leurs mélanges.

3. Composition qui contient en tant que
composant (A): 10 à 97 % en poids, par rapport au poids total de la composition, d'un ou plusieurs esters des acides monocarboxyliques de formule générale R¹-CO-OR ² où R¹ répresente un groupe aliphatique saturé ou non-saturé, linéaire ou ramifié, avec 11 à 23 atomes de carbone, R² représente un groupe aliphatique ramifié ou linéaire, cycloaliphatique ou aromatique avec 1 à 13 atomes de carbone, et la somme des atomes de carbone des groupes R¹ et R² est 30 au maximum, le ou les esters des acides monocarboxyliques ayant un point d'ébullition supérieur à 250 °C à une pression nominale de 101,3 kPa, et en tant que
composant (B): 3 à 90 % en poids, par rapport au poids total de la composition, d'un ou plusieurs agents de dispersion,
la composition ayant une viscosité inférieure à 5000 mPas à 25 °C.

4. Composition selon la revendication 3, **caracterisée en ce que** la somme des proportions pondérales du composant (A) et du composant (B) est au moins 90 % en poids, par rapport au poids total de la composition.

5. Composition selon l'une quelconque des revendications 3 ou 4, **caractérisée en ce qu'**elle contient au moins 75 % en poids du composant (A) et au plus 25 % en poids du composant (B).

6. Composition selon une ou plusieurs des revendications 3 à 5, **caractérisée en ce que** la composition a une viscosité inférieure à 500 mPas à 25 °C.

7. Composition selon une ou plusieurs des revendications 3 à 6, **caractérisée en ce que** les esters d'acides monocarboxyliques ont un point d'ébullition supérieur à 280 °C.

8. Composition selon une ou plusieurs des revendications 3 à 7, **caractérisée en ce que** R¹-CO-O correspond à un acide monocarboxylique linéaire et aliphatique R¹-COOH contenant 14 à 18 atomes de carbone, et/ou R² correspond à un composant d'estérification alcoolique R²-OH contenant 8 atomes de carbone au maximum, de préférence 1 atome de carbone.

9. Composition selon une ou plusieurs des revendications 3 à 8, **caractérisée en ce que** le composant (B) comprend un ou plusieurs composés choisis dans le groupe consistant à (a) sels des esters phosphoriques d'oligomères ou polymères contenant des groupes amine, (b) mono- ou diesters de l'acide phosphorique, (c) demi-esters acidiques des acides dicarboxyliques, (d) adduits de polyuréthane-polyamine, (e) mono- ou diamines polyalcoxylées, et (f) produits de réaction des acides gras non-saturés avec des mono-, di- et polyamines, des alcools aminés et des acides dicarboxyliques non-saturés et leurs anhydrides et leur sels et produits de réaction avec alcools et/ou amines.

10. Composition selon une ou plusieurs des revendications 3 à 9, **caractérisée en ce qu'**elle contient un composant (C) additionnel, et **en ce que** le composant (C) consiste à un ou plusieurs additifs choisis dans le groupe consistant à agents de nivellement, agents filmogènes, agents auxiliaires de rhéologie, agents anti-mousse, promoteurs d'adhésion, agents photoprotecteurs, biocides, stabilisateurs liquides ou solubles et catalyseurs.

11. Composition selon une ou plusieurs des revendications 3 à 10, **caractérisée en ce que** la composition est un milieu de dispersion.

12. Utilisation d'une ou plusieurs compositions des revendications 1 à 9 en tant que milieu de dispersion.

13. Utilisation selon la revendication 12 pour la dispersion d'une ou plusieurs matières sous forme pulvérulente et/ou fibreuse.

14. Matière à broyer obtenable par dispersion d'une ou plusieurs matières sous forme pulvérulente et/ou fibreuse dans le milieu de dispersion de la revendication 11.

15. Matière à broyer selon la revendication 14, dans laquelle la matière solide sous forme pulvérulente et/ou fibreuse est choisie dans le groupe consistant à pigments, materiaux de remplissage, agents de matage, agents ignifuges et agents propulseurs.
